# EUROPÄISCHE PATENTANMELDUNG

(11) **EP 3 785 789 A1**
(43) Veröffentlichungstag der Anmeldung: **03.03.2021**
(21) Anmeldenummer: 20191536.0
(22) Anmeldetag: 18.08.2020
(51) Int. Cl.: B01D 53/60, E01H 3/00

(54) **VERFAHREN UND MITTEL ZUR AUSWASCHUNG VON SCHADSTOFFEN AUS STADTLUFT IM STRASSENBEREICH**

(30) Priorität: 27.08.2019 DE 102019006031; 05.12.2019 DE 102019008468
(71) Anmelder: Ed. Züblin AG, 70567 Stuttgart (DE)
(72) Erfinder: Brosig, Dr. Stefan, 70563 Stuttgart (DE)
(74) Vertreter: dompatent von Kreisler Selting Werner - Partnerschaft von Patent- und Rechtsanwälten mbB

(57) **Zusammenfassung**

Es wird ein Verfahren und ein Mittel für die Durchführung des Verfahrens angegeben, mit dem saure Luftbestandteile und auch Feinstaub aus der Stadtluft im Bereich von Straßen entfernt werden. Dies geschieht durch sehr feines, aber noch nässendes (die Straßenoberfläche noch nass machendes) Versprühen einer unschädlichen wässrigen Lösung in den Straßenbereich, vorzugsweise in weniger als einem halben Meter Höhe und in seitliche Richtung auf den Verkehr. Prinzipiell kann aber auch weiter oben gesprüht werden, da die Lösung völlig unschädlich ist.

Bei der Lösung handelt es sich um ein Mineralwasser oder eine naturidentische, naturähnliche oder wirkungsgleiche Lösung mit einem Hydrogencarbonat-Gehalt von mehr als 100 Milligramm pro Liter, vorzugsweise mehr als 500 Milligramm pro Liter. Es gibt käufliche Mineralwässer zum Trinken mit bis zu ungefähr 3300 Milligramm Hydrogencarbonat pro Liter. Es kann ein Teil des Hydrogencarbonates auch durch lösliches Carbonat ersetzt sein.

Es werden pro Kilometer und pro 1000 Kraftfahrzeugen auf einer 10 Meter breiten Hauptverkehrsstraße ungefähr 500 bis 1000 Gramm Hydrogencarbonat als "Mineralwasser" versprüht. Für ein Mineralwasser mit 500 Milligramm Gehalt wären dies demnach 1000 bis 2000 Liter.

## Beschreibung

### Beschreibung

### Technisches Gebiet

Die Erfindung betrifft die Reduzierung von Schadstoffen aus abgasbelasteter Stadtluft, vorzugsweise direkt im Bereich der Straßen.

### Hintergrund der Erfindung

Es sind Filterlösungen zur Beseitigung von Stickoxiden oder/und Feinstaub bekannt, die auf der Basis von Aktivkohle als physikalisch agierendem Adsorbens arbeiten.
Zur Reduzierung von Stickoxiden wird auch gekörntes Titandioxid als Photokatalysator auf eine Fahrbahn festhaftend aufgebracht, das die Stickoxide im Endeffekt photochemisch nach Reaktion mit etwas Feuchtigkeit und Sauerstoff in die sehr starke Salpetersäure überführt, die z.B. mit Kalkstaub zu Calciumnitrat weiterreagiert, als Gas verdampft oder durch Regenwasser weggewaschen wird. In manchen Filtereinrichtungen werden Katalysatoren zur Umwandlung von Stickoxiden eingesetzt (z.B. von air2public). Auch Mooswände entlang von Straßen werden zur Schadstoffreduktion eingesetzt.
Gegen die unter anderem durch den Straßen-, Reifen- und Bremsscheibenabrieb auftretende Feinstaubbelastung hat es sich als effektiv erwiesen, die Straßen mit einem Wasserwagen zu sprengen, bevorzugt mehrmals am Tag.
Zur Entfernung von in relativ hohen Konzentrationen auftretenden sauren Gasen aus heißem Rauchgas, ist die Verwendung fester Carbonate und Hydrogencarbonate im Festbettreaktor bei hoher Temperatur bekannt (siehe z.B. Diplomarbeit von 2012 "Industriell eingesetzte Verfahren zur Abscheidung saurer Schadstoffe aus den Rauchgasen von Abfallverbrennungsanlagen" von Robert Wesseley, Technische Universität Graz).
In der EP 3434985 A1 wird eine komplizierte Vorrichtung angegeben, mit der mit Hilfe unterschiedlicher Verbindungen, darunter Kaliumhydroxid oder/und Natriumhydroxid als Feststoffe, Luftschadstoffe, darunter NOₓ, reduziert werden. Natrium- und Kaliumhydroxid werden zur Bindung von Kohlenoxiden verwendet, nicht zur Bindung von Stickoxiden.
Die bislang angewandten Lösungen sind teuer, wartungsaufwendig oder wenig effektiv, oder sie beseitigen nur ein Teilproblem der Schadstoffbelastung. Salpetersäure, die nicht in ein Nitrat umgewandelt wird, ist ebenfalls kein gesunder Luftbestandteil.
Von der Stadt Wien wird Kaliumcarbonat seit 1989 in großen Mengen (mehrere tausend Tonnen jährlich) als ökologisch wenig bedenklicher Streusalzersatz ausgebracht, entweder als Lösung oder auch in Blähton (siehe z.B. in "Studie über die Auftauwirkung stickstoffhaltiger Auftaumittel" von Martin Wresowar und Monika Sieghardt, 2000; außerdem im Bericht "Verminderung der Staubbelastung bei der Reinigung der Straßen von Streusplitt", von Prof. Dr. H. P. Lenz, TU Wien, und Dipl.-Ing. R. Rosenitsch, 2003; auch im Forschungsbericht "Optimierung der Feuchtsalzstreuung", TU Wien, Dezember 2011).
Von der Fa. Rudolf Klaghofer GmbH wird mit Kaliumcarbonat ummantelter Blähton als umweltfreundliches Winterstreumittel verwendet, bei dem der Blähton griffigkeitserhöhend wirkt.
In der DE 102019004175 A1 (veröffentlicht am 11. September 2019) werden in einer Variante Alkalicarbonate oder Alkalihydrogencarbonate in eine neben der Straße befindliche Kassette gesprüht, durch die Luft aus dem Straßenbereich angesaugt wird.
Die WO 2019/192826 A1 (veröffentlich am 10. Oktober 2019) von IFP Energies Nouvelles beschreibt ein Verfahren zur Reinigung von Stadtluft durch Auswaschung derselben in geschlossenen Luftwaschvorrichtungen, also "Luftwaschkammern", durch welche die verunreinigte Luft geblasen oder gesaugt wird und gleichzeitig mit einer wässrigen Waschlösung in Kontakt kommt, die wenigstens ein Mittel enthält, welches mit wenigstens einem Schadstoff reagiert. Die Waschlösung wird entweder in diese Luft nässend versprüht oder streicht über große Flächen, die mit der Waschlösung benetzt sind. Das in der WO 2019/192826 A1 beschriebene Verfahren ist ungleich aufwendiger als das Verfahren gemäß der in dieser Anmeldung beschriebenen Erfindung, denn es erfordert größere bauliche Maßnahmen, die ohne lange Straßensperrung nicht realisierbar sind.

Obwohl das Problem der Reinigung der Stadtluft schon seit geraumer Zeit "auf den Nägeln brennt" und die Wirtschaftskraft einer der Hauptindustrien Deutschlands (Automobilindustrie und Zuliefererindustrie) in ihrem Bestand gefährdet, wurde trotz zigtausender Entwicklungsingenieure kein wirklich einfaches und gangbares Verfahren gefunden, das Problem schnell und ohne ungeliebte Verbote durch die Politik zu lösen.
Es besteht also mit hoher Dringlichkeit Bedarf an einer schnellen, wirksamen, ungefährlichen und günstigen Lösung des Problems.

### Aufgabe der Erfindung

Aufgabe der Erfindung ist es, ein Verfahren und ein Mittel für dieses Verfahren anzugeben, das kostengünstig und effektiv im Straßenbereich eine Vielzahl an Schadstoffen in der Stadtluft reduziert. Schadstoffe sind vor allem Stickoxide, besonders Stickstoffdioxid, und Schwefeloxide, insbesondere Schwefeldioxid. Als weiterer Schadstoff ist Feinstaub zu nennen. Aber auch Pflanzenpollen sind hierzu nennen, deren allergisches Potential durch Luftschadstoffe, wie z.B. Rußpartikel, vervielfacht wird.
"Effektiv" bedeutet hierbei, dass die gesetzlichen Luftgrenzwerte durch das Verfahren unterschritten werden.

### Begriffserklärungen und -definitionen

"Unschädlich" im Sinne der Erfindung bedeutet: dem menschlichen Körper und der Umwelt in der verabreichten Menge nicht schadend. "Alle Ding' sind Gift und nichts ohn' Gift; allein die Dosis macht, dass ein Ding' kein Gift ist." (Paracelsus). Demnach sind z.B. Lösungen mit einem pH-Wert von mehr als 9 zwar in größeren Mengen schädlich, in der geringen Menge, die beim Versprühen in Kontakt mit menschlichen oder anderen Oberflächen kommt, aber immer noch nicht schädlich. Seifenlauge kann einen pH-Wert von bis zu 12 aufweisen. Demnach sind Lösungen mit einem pH-Wert von bis zu 12 bei Hautkontakt nicht schädlich.
"Absolut unschädlich" im Sinne der Erfindung sind Stoffe, die als Lebensmittel verwendbar sind oder wären, weil ihre Bestandteile in den angewendeten Konzentrationen und Mengen auch in Lebensmitteln wie Mineralwasser vorhanden sind.
"Nässendes Versprühen": Dieses führt zu einer Benetzung der Oberfläche mit einem Flüssigkeitsfilm. Hierzu treffen Tröpfchen auf die Oberfläche auf, bevor sie verdampft sind. Nässendes Versprühen ist daher z.B. bei technischen Anlagen zur Staubbindung notwendig.
"Schadstoffe" im Sinne der Erfindung sind Stoffe, die vom Gesetzgeber in den vorliegenden Konzentrationen in der Stadtluft als gesundheitsschädlich angesehen werden. Die Einschätzung dessen, was ein Schadstoff ist, ist von der Gesetzeslage und dem aktuellen Wissensstand abhängig. Die Schadstoffe, die zurzeit die größte Bedeutung in der Stadtluft haben, sind Stickoxide und Feinstaub. Schwefeloxide haben durch die Entschwefelung des Treibstoffes schon seit einiger Zeit kaum noch Bedeutung, doch Erkenntnisse und Verhältnisse können sich erfahrungsgemäß auch ändern.
"Reinigung" der Stadtluft bedeutet, dass die Konzentration (Mikrogramm pro Kubikmeter) der in der Stadtluft vorhandenen sauren luftverunreinigenden Bestandteile, die ausgewählt sind aus der Gruppe bestehend aus Stickstoffdioxid oder/und Stickstoffmonoxid oder/und Schwefeldioxid oder/und Schwefeltrioxid, nach Anwendung des erfindungsgemäßen Verfahrens bzw. Mittels reduziert ist, vorzugsweise um wenigstens 5 %, wenigstens 10 %, wenigstens 15 %, wenigstens 20 %, wenigstens 25 %, wenigstens 30 %.
"Saure Gase" sind ganz allgemein Gase, die mit Wasser zu einer Lösung reagieren, die einen pH-Wert kleiner als 7 aufweist. Das Kohlendioxid der Luft ist daher ebenfalls ein saures Gas. Erfindungsgemäß werden im Text mit sauren Gasen aber solche Gase bezeichnet, die in Wasser gelöst einen pKₛ-Wert aufweisen, der kleiner ist als der der Kohlensäure, also kleiner als 6,5.
Das sehr gut wasserlösliche Stickstoffdioxid ist von seiner Formel her das gemischte Anhydrid aus Salpetersäure (pKₛ = -1,4) und salpetriger Säure (pKₛ = 3,3), also einer sehr starken und einer mittelstarken Säure. Das sehr schlecht wasserlösliche Stickstoffmonoxid ist formelgemäß das Anhydrid der salpetrigen Säure (pKₛ = 3,3) und der hyposalpetrigen Säure (pKₛ = 7,2), also aus einer mittelstarken Säure und einer schwachen Säure. In Lösung dominiert immer die stärkere Säure den pH-Wert. Es findet aber durch Sauerstoff bzw. seine Modifikation Ozon eine Umwandlung des eigentlich relativ unschädlichen Stickstoffmonoxids (ein natürlicher Bestandteil im Stoffwechsel des menschlichen Körpers) in das eigentlich schädliche Reizgas Stickstoffdioxid statt. Schwefeldioxid ist das Anhydrid der mittelstarken schwefligen Säure (pKₛ = 1,8), Schwefeltrioxid das Anhydrid der starken Schwefelsäure (pKₛ = -3).

In dieser Beschreibung wird zwar von Stadtluft gesprochen, weil diese wegen der hohen Bebauung seitlich der Straßen und die dadurch verminderte Konvektion besonders stark mit Schadstoffen belastet sein kann, es kann sich aber dabei auch um die Luft in Dörfern oder über Straßen ohne hohe seitliche Bebauung handeln, wenn dort Luftgrenzwerte überschritten werden.

### Kurzbeschreibung der Erfindung

Erfindungsgemäß wurde die Aufgabe, wie nachfolgend beschrieben, gelöst:
1. Verfahren zur Reinigung von Stadtluft im Bereich einer Straße, dadurch gekennzeichnet, dass eine wässrige Lösung als sehr kleine Tröpfchen in den Straßenbereich gesprüht wird, wobei die wässrige Lösung Hydrogencarbonat-Ionen oder/und Carbonat-Ionen oder/und Hydroxid-Ionen enthält.
2. Verfahren gemäß 1., dadurch gekennzeichnet, dass eine Lösung versprüht wird, die zusätzlich ein Mittel enthält, welches die Oberflächenspannung der Lösung unter die Oberflächenspannung von Wasser herabsetzt.
3. Verfahren gemäß 1. oder 2., dadurch gekennzeichnet, dass eine Lösung versprüht wird, die pro Liter wenigstens 1,64 Millimol (mmol) an negativer Ladung eines Anions aus der Gruppe Hydrogencarbonat oder/und Carbonat oder/und Hydroxid enthält.
4. Verfahren gemäß 1. bis 3., dadurch gekennzeichnet, dass optional ein Mineralwasser, ein naturidentisches Wasser oder ein wirkungsgleiches Wasser mit einem Hydrogencarbonat-Gehalt von mehr als 100 Milligramm (1,64 Millimol) pro Liter in den Straßenbereich versprüht wird.
5. Verfahren gemäß 1. bis 4., dadurch gekennzeichnet, dass die Lösung so versprüht wird, dass der größte Teil der Lösung nach dem Versprühen eine Tropfengröße von kleiner als 50 Mikrometern (Größe von großen Wolkentropfen) aufweist.
6. Verfahren gemäß 1. bis 5., dadurch gekennzeichnet, dass optional die Lösung so versprüht wird, dass der größte Teil der Lösung nach dem Versprühen eine Tropfengröße von mehr als 5 Mikrometern (Größe von typischen Wolkentropfen) aufweist.
7. Mittel zur Reinigung von Stadtluft im Bereich einer Straße durch Versprühen des Mittels in die Luft über der Straßenfläche,
   dadurch gekennzeichnet, dass das Mittel eine wässrige Lösung ist, die pro Liter wenigstens 1,64 Millimol an negativer Ladung eines Anions enthält, das ausgewählt ist aus der Gruppe bestehend aus Hydrogencarbonat oder/und Carbonat oder/und Hydroxid.
8. Mittel gemäß 7., dadurch gekennzeichnet, dass das Mittel auch eine oder mehrere Substanzen enthält, welche die Oberflächenspannung der Lösung unter diejenige von Wasser herabsetzen.
9. Mittel gemäß 7. oder 8., dadurch gekennzeichnet, dass es sich dabei um ein lebensmitteltaugliches Mineralwasser, ein dem Mineralwasser naturidentisch oder im Wesentlichen naturidentisch nachgebildetes Wasser oder ein wirkungsgleiches Wasser handelt.
10. Verwendung von lebensmitteltauglichem Mineralwasser mit einem Hydrogencarbonat-Gehalt von mehr als 1,64 Millimol pro Liter zur Reinigung von schadstoffbelasteter Stadtluft im Straßenbereich durch Versprühen als Tröpfchen in die Luft des Straßenbereiches.

Zusammenfassend betrifft die Erfindung die Verwendung einer wässrigen Lösung von Natriumhydrogencarbonat, Kaliumhydrogencarbonat, oder Calciumhydrogencarbonat oder Gemischen davon zur Reduktion der Konzentration von Feinstaub, Stickoxiden und/oder Schwefeloxiden in Stadtluft, wobei die wässrige Lösung in der Stadtluft versprüht wird. Das Versprühen der wässrigen Lösung erfolgt nur, wenn tatsächlich Bedarf besteht, insbesondere wenn gesetzlich definierte oder anderweitig festgelegte Grenzwerte der genannten Verunreinigungen überschritten werden.

### Beschreibung der Erfindung

Gemäß der Erfindung wird eine absolut unschädliche wässrige Lösung von Stoffen, die mit Stickoxiden oder/und Schwefeloxiden reagieren, im Straßenbereich versprüht, vorzugsweise nässend, so dass diese die Schadstoffe auswäscht und dann vorzugsweise zu Boden sinkt und von dort abfließt oder ihr Wasseranteil erst dort verdunstet.
Der derzeitige Jahresgrenzwert in Deutschland für den Schadstoff Stickstoffdioxid NO₂ zum Schutz der menschlichen Gesundheit beträgt 40 Mikrogramm pro Kubikmeter Luft. Der Stunden-Grenzwert dieses Schadstoffes gemittelt über 1 Stunde darf nicht öfter als 18 mal im Kalenderjahr den Wert von 200 Mikrogramm pro Kubikmeter überschreiten.
Als unschädliche Stoffe, die mit Stickoxiden und Schwefeloxiden reagieren, sind vor allem Alkalicarbonate und Alkalihydrogencarbonate hervorzuheben, und von diesen ganz besonders die Alkalihydrogencarbonate. Dabei sind die Carbonate und Hydrogencarbonate von Natrium und Kalium ganz besonders bevorzugt. Sie können rein oder in Kombination (d.h. gemischt) angewendet werden. Am kostengünstigsten sind die Natriumverbindungen. Kaliumverbindungen sind für die meisten Pflanzen gesünder. Für Menschen ist nach derzeitigem Wissensstand eine Mischung aus Kaliumverbindung und Natriumverbindung als gesünder zu betrachten. Was die menschliche Gesundheit betrifft, ist eine Mischung, bei der Natrium und Kalium im gleichen molaren Verhältnis vorkommen, wie im menschlichen Körper, besonders bevorzugt. Hierzu variieren die in der Literatur angegeben Werte leicht, aber das molare Verhältnis Kalium: Natrium beträgt im menschlichen Körper ungefähr 2,6:1 bis 2:1. Die WHO empfiehlt für die orale Aufnahme ein Verhältnis von Kalium: Natrium von 1:1.
In üblichen Mineralwässern überwiegt Natrium aber Kalium meistens sehr deutlich, ohne dass gesundheitliche Auswirkungen zu befürchten sind. Mineralwässer für Babys sind besonders natriumarm. Sie sind aber insgesamt arm an Mineralstoffen und auch für die Ausführung der Erfindung daher ungeeignet, wenn ihr Gehalt an Carbonat oder Hydrogencarbonat die später noch angegebenen Werte unterschreitet.
Calciumhydrogencarbonat ist auch möglich, aber oft weniger praktisch, außer wenn es sowieso schon in natürlichen Mineralwässern vorkommt.

Alkalihydroxide binden Stickoxide und Schwefeloxide sehr effektiv, haben aber als starke Basen in Lösung auch schon in geringen Konzentrationen einen hohen pH-Wert. Auch wenn sie nur in geringer Menge versprüht werden und auf feuchten Oberflächen eine sofortige Verdünnung erfolgt, so können auf nicht feuchten Flächen Reaktionen mit den Oberflächen erfolgen, z.B. Verfärbungen. Alkalihydroxide wie Natriumhydroxid oder Kaliumhydroxid sind daher mit viel mehr Vorsicht anzuwenden und daher nur für Spezialfälle oder in geringer Menge als Zusätze sinnvoll. Spezialfälle könnten kurzeitige besonders hohe Schadstoffbelastungen sein, für die ein höherer (alkalischerer) pH-Wert der Waschlösung die Reaktionsgeschwindigkeit steigerte. In geringer Menge bis zu einem pH-Wert von etwa 9 der Waschlösung ist auch keine Augenschädigung zu erwarten, da die ständig produzierte Tränenflüssigkeit selbst schon einen pH-Wert von 7,4 aufweist, puffernd wirkt und die nur kleinsten Tröpfchen beim Versprühen sich auf dem Auge rasch verdünnen. Einen gepufferten pH-Wert von 7,4 hat auch die Flüssigkeit in der Lunge. Ein pH-Wert von 9 entspricht ungefähr einer Konzentration an Hydroxidionen von 0,01 Millimol pro Liter.
Überraschenderweise wurde erfindungsgemäß gefunden, dass viele handelsübliche, vorzugsweise (aber nicht zwangsweise) stille (also nicht sprudelnde) Mineralwässer zum Trinken für eine Reduzierung von Stickoxiden und Schwefeloxiden eine geeignete Zusammensetzung aufweisen. Bekannte handelsübliche Mineralwässer können bis zu 3500 mg/L Hydrogencarbonat enthalten (z.B. Adelheid Quelle mit ca. 3000 mg/L an Hydrogencarbonat).
Solche Mineralwässer enthalten Hydrogencarbonat, welches saure Gase, wie Stickoxide und Schwefeloxide, bindet. Gleichzeitig bindet der Wasseranteil den Feinstaub.
Durch das Hydrogencarbonat mit pH-Pufferwirkung bleibt die Lösung ungefähr neutral und wirkt nicht korrosiv auf Stahl.
Das Versprühen der erfindungsgemäßen Lösung geschieht bevorzugt nässend, denn dann ist die Auswaschung besser, weil durch die fallenden Tropfen eine Abwärtsbewegung der Luft erzeugt wird, welche die Schadstoffe auf die Straßenoberfläche befördert, wo sie mit der Flüssigkeit abfließen oder bei großer Hitze (ungefähr 30 °C oder mehr) durch Verdunstung des Wasseranteils verkleben. Hierzu gibt es viele geeignete oder leicht anpassbare Systeme auf dem Markt, z.B. auch von der österreichischen Firma A. Rauch GmbH, Befeuchtungssysteme. Diese Systeme gibt es schon für unterschiedliche Anwendungen und Auswurfweiten von Wasser. Die Straßen können mit solchen Systemen dabei von oben oder von der Seite oder von beiden Seiten mit Sprühnebel bestrichen werden.
Düsenlose Systeme sind bevorzugt, da diese weniger wartungsanfällig sind. Bei der nässenden Versprühung wird auch der nicht wasserlösliche Feinstaub von Straßen-, Bremsscheiben und Reifenabrieb aus der Luft ausgewaschen. Feinstaub wird neuerdings von den Gesundheitsbehörden als gesundheitsbedenklicher eingestuft als die Stickoxide. Zur nässenden Versprühung eignen sich Systeme, die zur Staubbindung eingesetzt werden.
Vorzugsweise werden erfindungsgemäß Systeme verwendet, bei denen die Tröpfchengröße (d.h. Tröpfchendurchmesser) des größten Teils der versprühten Lösung (mehr als 50 % der versprühten Lösung) kleiner als 50 Mikrometer (µm) ist, vorzugsweise kleiner als 40 Mikrometer, mehr bevorzugt kleiner als 35 Mikrometer. Verfahren und Vorrichtungen auch zur automatisierten Bestimmung der Tröpfchengröße, z.B. von Sprays, sind im Stand der Technik bekannt. Als beispielhaftes Verfahren sei die Laser-Beugung genannt.

Es ist prinzipiell aber auch eine nichtnässende Versprühung möglich, bei der der größte Teil der Flüssigkeitströpfchen so klein ist (kleiner oder gleich ungefähr 10 Mikrometer), dass sie relativ schnell verdampfen und dadurch einen Kühleffekt erzeugen. Der größte Anteil der versprühten Lösung sollte erfindungsgemäß aber einen Durchmesser von mehr als 5 Mikrometern, vorzugsweise von mehr als 10 Mikrometern aufweisen.
Der Lösungsverbrauch ist dadurch geringer, aber die Tröpfchen verdampfen schnell, und es verbleibt feinster "Feststoffstaub" in der Luft, der aber wasserlöslich ist und im Feuchtigkeitsfilm auf den Schleimhäuten der Atemwege sofort wieder aufgelöst wird. Es gibt durch die geringe Wassermenge in den Tröpfchen und die verglichen dazu große Wassermenge auf den Schleimhäuten kaum einen Unterschied, ob feinste Flüssigkeitströpfchen oder feinste getrocknete Feststoffteilchen eingeatmet werden. Das ist ähnlich wie bei Meeresluft oder der Luft neben Gradierwerken. Es handelt sich also nicht um physiologisch aktiven Feinstaub, auch wenn Messgeräte ihn als solchen anzeigen.
Auch die eingetrockneten feinsten Hydrogencarbonat oder Carbonat enthaltenden Feststoffteilchen reagieren mit den Stickoxiden (vor allem mit dem Hauptreizgas Stickstoffdioxid, Stickstoffmonoxid ist deutlich unschädlicher) und Schwefeloxiden (vor allem Schwefeldioxid, andere Schwefeloxide kommen kaum vor) in der Stadtluft. Die Reaktion erfolgt aber langsamer, weil auch noch wieder Wasser aus der Luftfeuchtigkeit für die Reaktion hinzukommen muss. Aufgrund der nur geringen Konzentrationen an Stickoxiden und Schwefeloxiden sind nur geringe Mengen an versprühtem Hydrogencarbonat oder Carbonat nötig.
1 Kilo wasserfreies Natriumcarbonat (9,43 Mol oder 18,86 Mol an Natriumionen) ("Waschsoda") oder 1,58 kg (18,86 Mol) wasserfreies Natriumhydrogencarbonat ("Backsoda", "Bullrich Salz") ist z.B. in der Lage, die NOₓ-Menge (als NO₂ gerechnet) des schmutzigsten gemessenen Diesel-PKW von knapp 1000 Milligramm (als NO₂ gerechnet 0,0217 Mol) pro Kilometer über eine Strecke von 870 Kilometern völlig zu binden.
1 Mol Natriumcarbonat (Na₂CO₃) bindet 2 Mol NO₂, jedes Mol Natriumionen eines. 1 Mol Natriumhydrogencarbonat (NaHCO₃) bindet nur 1 Mol NO₂. Jedes Mol eines einfach negativ geladenen Hydrogencarbonations oder Hydroxidions reagiert mit einem Mol NO₂. Jedes Mol eines zweifach negativ geladenen Carbonations oder Oxidions reagiert mit 2 Mol NO₂. Es ist daher sinnvoll, die Menge des NO₂, das gebunden werden kann, auf die Molzahl negativer Ladung im Gemisch aus Carbonat oder/und Hydrogencarbonat oder/und Oxid oder/und Hydroxid zu beziehen. Jedes Mol negative Ladung des betreffenden Ions oder Ionengemisches reagiert dann mit einem Mol NO₂. Z.B. wird ein Mol HCO₃⁻ durch ein Mol NO₃⁻ oder NO₂⁻ aus seinen Salzen verdrängt, oder ein Mol CO₃²⁻ durch zwei Mol NO₃⁻ oder NO₂⁻. (Nitrit- und Nitratanionen entstehen durch Reaktion von NO₂ mit Wasser (Disproportionierung).)
In den meisten Fällen und wenn nur Teile des NOₓ aus dem Abgas entfernt werden müssen, reicht ein Kilogramm Natriumcarbonat oder 1,58 kg Natriumhydrogencarbonat daher ein Mehrfaches weiter!

Vom Kaliumcarbonat und Kaliumhydrogencarbonat, die aufgrund des Elementes Kalium eine etwas höhere Molmasse von 138 Gramm bzw. 100 Gramm aufweisen, wären gewichtsmäßig etwas höhere Mengen für die gleiche Menge an zu bindendem Stickoxid notwendig, nämlich 1,30 bzw. 1,86 Kilogramm.
Wenn man über einer Straßenoberfläche von 1 Kilometer Länge und etwa 10 Metern Breite zumindest während der schadstoffemissionsstärksten Zeit (Berufsverkehrszeit) eine Lösung versprühte, die 10 kg (94,3 Mol) Natriumcarbonat (oder 15,8 kg (188,6 Mol) Natriumhydrogencarbonat, oder 13 kg (94,3 Mol) Kaliumcarbonat, oder 18,6 kg (188,6 Mol) Kaliumhydrogencarbonat) enthielte, könnten damit prinzipiell die Stickoxide von 8700 dreckigsten Dieselfahrzeugen ausgewaschen werden. Samt dem von diesen Fahrzeugen erzeugten Feinstaub. Das wären bei der angenommenen Fläche von 10.000 Quadratmetern 1 Gramm Natriumcarbonat oder 1,58 Gramm Natriumhydrogencarbonat oder 1,3 Gramm Kaliumcarbonat oder 1,86 Gramm Kaliumhydrogencarbonat pro Quadratmeter. In verallgemeinernder Darstellung sind dies 9,43 Millimol Alkalicarbonat oder 18,86 Millimol Alkalihydrogencarbonat pro Quadratmeter.
Noch allgemeiner: 18,86 Millimol pro Quadratmeter an negativer Ladung eines Carbonats, Hydrogencarbonats oder Hydroxids, welches mit den zuvor genannten sauren Luftbestandteilen reagiert. (Das Carbonation hat zwei negative Ladungen, daher braucht es verglichen mit dem einfach negativ geladenen Hydrogencarbonation doppelt so viel Nitrat oder Nitrit (entsteht aus NO₂ und Wasser), um aus seinen Salzen verdrängt zu werden.)
Da die meisten Dieselfahrzeuge und die benzinverbrennenden Fahrzeuge deutlich weniger ausstoßen und nur ein Teil der Abgase mit dem Carbonat oder Hydrogencarbonat (oder Oxid oder Hydroxid) reagiert und ein Teil sich zudem in höhere Luftschichten verflüchtigt und dort auch durch Luftströmungen abtransportiert wird, reichen ungefähr 100 Mol eines Carbonats oder 200 Mol eines Hydrogencarbonats pro Tag und befahrenem Kilometer an vielbefahrenen Straßen in der Stadt aus. Wenn man nicht den ganzen Tag über sprühen muss, weil die Luftgrenzwerte nicht erreicht werden, reduziert sich der Verbrauch weiter deutlich.
Es werden zum Zwecke der Stadtluftreinigung von den beschriebenen sauren Gasen im Bedarfsfall pro Tag mehr als 0,001 Mol "negativer Ladung" des chemisch reagierenden Anions des Absorbens pro Quadratmeter Straßenfläche aufgebracht. (Das entspricht, wie oben beschrieben, mehr als 0,001 Mol einfach negativ geladenem Hydrogencarbonat oder/und Hydroxid oder 0,0005 Mol zweifach negativ geladenem Carbonat.)
Vorzugsweise werden zwischen 0,002 und 0,5 Mol pro Quadratmeter aufgebracht. Mehr bevorzugt werden zwischen 0,005 Mol pro Quadratmeter und 0,1 Mol pro Quadratmeter aufgebracht. Noch mehr bevorzugt werden zwischen 0,005 Mol und 0,05 Mol pro Quadratmeter aufgebracht.
Wenn nur zu wenigen kurzen Stoßzeiten hohe Schadstoffwerte in der Luft vorliegen, ist es bevorzugt, nur zu diesen Zeiten (die Berufsverkehrszeit) die schadstoffbindende Lösung zu versprühen. Dadurch verringert sich die nötige Menge an Lösung. Die Zeiten, zu denen gesprüht werden soll, können z.B. durch Sensormessungen gesteuert werden, die die Schadstoffe vor Ort messen und vor oder bei Erreichen der Grenzwerte die Sprühvorrichtung anschalten. Es ist auch eine einfache Steuerung mittels Zeitschaltuhr möglich, wenn die Werte immer zu gleichen Zeiten die Grenzwerte überschreiten. Es ist auch eine Fernsteuerung möglich, mit der eine Person die Sprühvorrichtung einschaltet, wenn sie der Meinung ist, dass dies notwendig wäre.
Es wird somit ein Verfahren und ein Mittel für die Durchführung des Verfahrens angegeben, mit dem saure Luftbestandteile und auch Feinstaub aus der Stadtluft im Bereich von Straßen entfernt werden. Dies geschieht durch sehr feines, aber bevorzugt noch nässendes Versprühen/Vernebeln einer unschädlichen wässrigen Lösung in den Straßenbereich hinein. Vorzugsweise versprüht man nur bis maximal einem halben Meter Höhe (wegen Cabrios) und in seitliche Richtung auf den Verkehr. Prinzipiell kann aber auch weiter oben gesprüht werden, z.B. auch von Verkehrsbrücken, Fußgängerüberwegen oder ähnlichem herab, oder auch in Tunneln, U-Bahnstationen und Unterführungen, da die Lösung völlig unschädlich ist.
Die versprühte Lösung enthält zur Bindung der sauren Gase (Stickoxide und Schwefeloxide) die beschriebenen Ionen, wenigstens aber Hydrogencarbonationen. Vorzugsweise handelt es sich bei der erfindungsgemäßen Lösung um ein lebensmitteltaugliches Mineralwasser oder eine naturidentische oder naturähnliche Lösung oder auch eine technisch wirkungsgleiche Lösung mit einer Hydrogencarbonatkonzentration von mehr als 100 Milligramm (1,64 Millimol) pro Liter, vorzugsweise mehr als 300 Milligramm (4,9 Millimol) pro Liter. Noch bevorzugter sind Hydrogencarbonatkonzentrationen von mehr als 500 Milligramm (8,2 Millimol) pro Liter. Es gibt handelsübliche Mineralwässer zum Trinken mit bis zu ungefähr 3400 Milligramm (56 Millimol) Hydrogencarbonat pro Liter. Von solchen Wässern muss entsprechend weniger versprüht werden. Grundsätzlich gilt, dass je höher die Carbonat- oder Hydrogencarbonatkonzentration (insbesondere Natriumcarbonat und Natriumhydrogencarbonat) in der Sprühlösung ist, umso höher die Auswaschungseffizienz.
Ein Teil des Hydrogencarbonats (bis zu 30 %, bevorzugt aber weniger als 20 %) kann auch durch lösliches Carbonat ersetzt sein, was in Mineralwässern zum Trinken wegen des stärkeren Geschmacks aber nicht so gut akzeptiert wird. Für die Stadtluftreinigung hingegen hat Carbonat den Vorteil einer schnelleren Reaktion mit den sauren Luftbestandteilen. Weiterhin wirkt es seifig tensidartig und benetzt Feinstaub etwas besser, der dann an die Flüssigkeit gebunden nach unten absinkt.
Es können der versprühten Lösung pro Liter auch bis zu 1 Millimol Hydroxidionen in Form von Natriumhydroxid oder Kaliumhydroxid zugesetzt sein. Calciumhydroxid ist prinzipiell auch möglich. Dadurch erhält die Lösung (gemäß dem Gleichgewicht aus den Konzentrationen von OH⁻ und H⁺, bei dem das Produkt aus den molaren Konzentrationen 10 - 14 mol²/Liter² beträgt) einen pH-Wert von maximal ungefähr 11. Durch die Pufferung mit Hydrogencarbonat liegt der pH-Wert aber, je nach Menge desselben, deutlich tiefer.
Falls eine stärkere Benetzung des Feinstaubs aus irgendwelchen Gründen erforderlich sein sollte, können der Lösung auch in geringer Menge (beispielsweise bis zu 10 Gew.-%, vorzugsweise bis zu 5 Gew.-%) die Oberflächenspannung des Wassers (72,75 mN/m bei 20 °C) herabsetzende Tenside beigemischt sein. Diese sind bevorzugt lebensmittelgeeignet (in diesem Falle sogenannte "Emulgatoren"). Aus diesen wählt man dann vorzugsweise einen Emulgator mit geringer Viskosität aus. Emulgatoren mit zu hoher Viskosität führen dazu, dass die Lösung sich nicht mehr fein genug versprühen lässt. Die Viskosität der Lösung sollte nicht mehr als die doppelte Viskosität der Lösung ohne Emulgator bei der gleichen Temperatur aufweisen. Man findet solche Emulgatoren in der "Liste der in der Europäischen Union zugelassenen Lebensmittelzusatzstoffe".
Gegen das Versprühen eines solchen Wassers, vor allem im natürlichen und naturidentischen Falle, sind keine Klagen von Bürgern zu befürchten.
Es werden in den Stoßzeiten (Berufsverkehrszeit), wenn hohe Verkehrsdichte und hohe Schadstoffbelastung herrscht, pro Kilometer und pro 1000 Kraftfahrzeugen auf einer 10 Meter breiten Hauptverkehrsstraße ungefähr 500 bis 1000 Gramm (8,2 bis 16,4 Mol) Hydrogencarbonat als "Mineralwasser" versprüht. Für ein Mineralwasser mit 500 Milligramm Gehalt wären das demnach 1000 bis 2000 Liter.
Im allgemeineren Falle werden pro Kilometer und pro 1000 Kraftfahrzeugen auf einer 10 Meter breiten Hauptverkehrsstraße ungefähr 8,2 bis 16,4 Mol an negativen Ionen aus der Gruppe Hydrogencarbonat, Carbonat, Hydroxid versprüht. Es können aber auch deutlich geringere Mengen versprüht werden, wenn es darum geht, den Gehalt an Schadstoffen nicht maximal zu drücken, sondern nur hinreichend weit unter den vom Gesetzgeber geforderten Grenzwert.
Ebenso können natürlich auch deutlich höhere Mengen versprüht werden, wodurch die Auswaschleistung steigt. Es gilt aber auch hier das sogenannte "Gesetz der abnehmenden Erträge", das besagt, dass eine Verdoppelung der Menge nicht zu einer Verdoppelung des Effektes führt.
Durch das Versprühen der Lösung wird aufgrund der kleinen Tröpfchen eine sehr große Oberfläche erzeugt, über die die Schadstoffe in der Luft mit dem Hydrogencarbonat (oder/und Carbonat oder/und Hydroxid) reagieren können. Vorzugsweise wird die Lösung so versprüht, dass der größte Teil der Lösung eine Tropfengröße von weniger als 50 Mikrometern aufweist (Größe von großen Wolkentropfen). Bei dieser Größe hat ein Tropfen eine Fallgeschwindigkeit von ungefähr 30 Zentimetern pro Sekunde.
Vorzugsweise wird die Lösung auch so versprüht, dass der größte Teil eine Tropfengröße von mehr als 5 Mikrometern aufweist. Bei dieser Größe hat ein Tropfen eine Fallgeschwindigkeit von ungefähr 0,3 Zentimetern pro Sekunde.
Bei großer Hitze (mehr als 25 Grad Celsius) ist es sinnvoll, größere Tröpfchen (mittlere Größe mehr als 30 Mikrometer) zu versprühen als bei Kälte (weniger als 10 Grad Celsius, dann mittlere Größe unter 20 Mikrometer), denn bei Hitze verdunstet ein Teil des Tröpfchens, wodurch sich ihr Durchmesser und ihre Sinkgeschwindigkeit verringert.
Die Sinkgeschwindigkeit von Tröpfchen folgt ungefähr dem Stokes-Gesetz, wenn man die Stokes-Reibungskraft mit der Schwerkraft des Tröpfchens gleichsetzt. Der Durchmesser geht dabei ungefähr umgekehrt proportional quadratisch in die Sinkgeschwindigkeit ein. Ein Tröpfchen von 25 Mikrometern Durchmesser fällt also 4 mal langsamer als eines von 50 Mikrometern Durchmesser und eines von 10 Mikrometern ungefähr 25 mal langsamer als eines von 50 Mikrometern Durchmesser.
Dies gilt natürlich nur bei ruhender Luft, wohingegen Straßenluft stark verwirbelt wird. Ein Teil wird stark auf die Straßenfläche zu beschleunigt, ein Teil in die Gegenrichtung aufwärts, so dass sich ein Teil der versprühten Tröpfchen früher an der Straßenfläche abscheidet und ein Teil später als im Falle ruhender Luft.
Erfindungsgemäß wird die Lösung vorzugsweise mit einer Tröpfchengröße versprüht, bei welcher der größte Teil der Lösung in Tropfenform einen Durchmesser zwischen 5 und 50 Mikrometern aufweist.
Das Versprühen der Lösung muss nicht kontinuierlich, also mit über die Zeit gleichmäßiger Ausbringung an Volumen erfolgen. Es kann vielmehr auch getaktet sein, so wie man es bei manchen Rasensprinklern sieht. Ein getaktetes Ausbringen ist sparsamer im Verbrauch.
Da man einen Nebel aus Tröpfchen ausbringt, die über einen gewissen Zeitraum schweben, ist es z.B. möglich, auch bei starkem Verkehr, eine Menge Lösung zu versprühen, bis die Luft über der überstrichene Straßenfläche mit nässendem Nebel gefüllt ist, und dann zu warten, bis sich dieser Nebel gesetzt hat und sich wieder hinreichend viele Schadstoffe in der Luft über der Straßenfläche angesammelt haben, bevor erneut ein Sprühstoß erfolgt. Sprühstöße dauern üblicherweise 1 bis 20 Sekunden, die Zeit zwischen den Sprühstößen 2 Sekunden bis 3 Minuten. Andere Zeiten sind fallspezifisch auch möglich.
Eine wässrige Lösung von Hydrogencarbonat reagiert mit den sauren Luftbestandteilen und dem Luftsauerstoff zu unschädlichen Produkten: Nitriten und Nitraten, bzw. Sulfiten und Sulfaten. Diese sind wasserlöslich.

Eine wässrige Lösung von Carbonat reagiert mit den sauren Luftbestandteilen ebenfalls zu Nitriten und Nitraten, bzw. Sulfiten und Sulfaten. Ein Teil des Carbonats reagiert auch mit Kohlendioxid der Luft zu Hydrogencarbonat, welches dann seinerseits mit Stickoxiden oder Schwefeloxiden weiterreagieren kann. Eine wässrige Lösung von Hydroxid reagiert mit den sauren Luftbestandteilen ebenfalls zu Nitriten und Nitraten, bzw. Sulfiten und Sulfaten. Darüber hinaus reagiert es mit Kohlendioxid zu Carbonaten und Hydrogencarbonaten, die ihrerseits mit Stickoxiden und Schwefeloxiden weiterreagieren können.
Das Hydroxidion ist prinzipiell dasjenige Agens, das am schnellsten mit Stickoxiden und Schwefeloxiden reagiert.

## Patentansprüche

1. Verfahren zur Reinigung von Stadtluft im Bereich einer Straße, **dadurch gekennzeichnet, dass** eine wässrige Lösung als sehr kleine Tröpfchen in den Straßenbereich gesprüht wird, die Hydrogencarbonat-Ionen oder/und Carbonat-Ionen oder/und Hydroxid-Ionen enthält.

2. Verfahren nach Anspruch 1, **dadurch gekennzeichnet, dass** die Lösung zusätzlich ein Mittel enthält, welches die Oberflächenspannung der Lösung unter die Oberflächenspannung von Wasser herabsetzt.

3. Verfahren nach einem der Ansprüche 1 oder 2, **dadurch gekennzeichnet, dass** eine Lösung versprüht wird, die pro Liter wenigstens 1,64 Millimol an negativer Ladung eines Anions aus der Gruppe Hydrogencarbonat oder/und Carbonat oder/und Hydroxid enthält.

4. Verfahren nach einem der Ansprüche 1 bis 3, **dadurch gekennzeichnet, dass** ein Mineralwasser, ein naturidentisches Wasser oder ein wirkungsgleiches Wasser mit einem Hydrogencarbonat-Gehalt von mehr als 100 Milligramm (1,64 Millimol) pro Liter in den Straßenbereich versprüht wird.

5. Verfahren nach einem der Ansprüche 1 bis 4, **dadurch gekennzeichnet, dass** die Lösung so versprüht wird, dass der größte Teil der Lösung nach dem Versprühen eine Tropfengröße von kleiner als 50 Mikrometern aufweist.

6. Verfahren nach einem der Ansprüche 1 bis 5, **dadurch gekennzeichnet, dass** die Lösung so versprüht wird, dass der größte Teil der Lösung nach dem Versprühen eine Tropfengröße von mehr als 5 Mikrometern aufweist.

7. Mittel zur Reinigung von Stadtluft im Bereich einer Straße durch Versprühen des Mittels in die Luft über der Straßenfläche, **dadurch gekennzeichnet, dass** das Mittel eine wässrige Lösung ist, die pro Liter wenigstens 1,64 Millimol an negativer Ladung eines Anions ausgewählt aus der Gruppe bestehend aus Hydrogencarbonat oder/und Carbonat oder/und Hydroxid enthält.

8. Mittel nach Anspruch 7, **dadurch gekennzeichnet, dass** das Mittel zusätzlich eine oder mehrere Substanzen enthält, welche die Oberflächenspannung der Lösung unter diejenige von Wasser herabsetzen.

9. Mittel nach einem der Ansprüche 7 und 8, **dadurch gekennzeichnet, dass** es sich dabei um ein lebensmitteltaugliches Mineralwasser, ein dem Mineralwasser naturidentisch oder im Wesentlichen naturidentisch nachgebildetes Wasser oder ein wirkungsgleiches Wasser handelt.

10. Verwendung von lebensmitteltauglichem Mineralwasser mit einem Hydrogencarbonat-Gehalt von mehr als 1,64 Millimol pro Liter zur Reinigung von schadstoffbelasteter Stadtluft im Straßenbereich durch Versprühen als feinste Tröpfchen in die Luft des Straßenbereiches.
